# EUROPÄISCHE PATENTSCHRIFT

(11) **EP 2 239 525 B1**
(45) Veröffentlichungstag und Bekanntmachung des Hinweises auf die Patenterteilung: **28.12.2011**
(21) Anmeldenummer: 09004819.0
(22) Anmeldetag: 01.04.2009
(51) Int. Cl.: F24J 2/24, F24J 2/46

(54) **Verschlusskappe**
Closing cap
Clapet de fermeture

(43) Veröffentlichungstag der Anmeldung: 13.10.2010
(73) Patentinhaber: KIOTO Clear Energy AG, 9300 St. Veit an der Glan (AT)
(72) Erfinder: Obermann, Wolfgang, 9061 Klagenfurt/Wölfnitz (AT); Rankl, Heinz, 9321 Passering (AT); Lutschounig, Klaus, 9020 Klagenfurt (AT)
(74) Vertreter: Becker, Thomas

(56) Entgegenhaltungen:
- EP-A- 1 182 417
- WO-A-2004/111549
- WO-A-2008/106699
- DE-A1- 10 011 812
- DE-A1- 10 356 163
- DE-A1-102007 006 588
- DE-C1- 10 132 639
- US-A- 5 395 139
- US-A- 5 832 946
- US-A- 6 000 731

## Beschreibung

Die Erfindung betrifft eine Verschlusskappe für ein von Flüssigkeit durchströmbares Rohr eines Wärmespeichers, insbesondere eines Solarkollektors.

Es sind Solarkollektoren bekannt, die ein im Wesentlichen wannenförmiges Gehäuse aufweisen, welches von einer transparenten Abdeckung geschlossen wird. Im Gehäuse sind mehrere, nebeneinander angeordnete Rohre angeordnet, die miteinander in strömungstechnischer Verbindung stehen. Die Rohre werden von einem Fluid, meist Wasser, durchströmt, welches über einen entsprechenden Zulauf zugeführt und über einen entsprechenden Ablauf weggeführt wird.

Bei Anschluss des Wärmespeichers an eine häusliche Wasserversorgung folgt daraus, dass der Wärmespeicher unter entsprechendem Betriebsdruck, meist 2 bis 10 bar, steht.

Deshalb müssen die Bereiche des Kollektors, die unter Betriebsdruck stehen, entsprechend dimensioniert und ausgelegt werden. Gleichzeitig wird eine möglichst flache Bauform des Kollektors angestrebt.

Die DE 101 32 639 C1, DE 94 04 615 U1 und EP 1 095 231 B1 zeigen verschiedene Bauarten solcher Kollektoren. Die WO 2008/106699 A1 zeigt den Anschluss einer Erdsonde mit den Merkmalen des Oberbegriffs von Anspruch 1. Die DE 10 2007 006 588 A1 zeigt den Anschluss eines Wärmetauscher - Sammelkastens mit Sperrorganen im übergangsbereich zwischen Stutzen und Deckel.

Aufgabe der Erfindung ist es, einen Wärmespeicher der genannten Art konstruktiv zu vereinfachen, seine Montage zu erleichtern und gleichzeitig die Anwendung unter Betriebsbedingungen zu optimieren.

In diesem Zusammenhang weisen bekannte Ausführungsformen den Nachteil auf, dass entlang des Strömungsweges der Flüssigkeit durch den Kollektor/Wärmespeicher Luft angesaugt wird und/oder sich nur eine unvollständige Durchmischung von Fluidzonen unterschiedlicher Temperatur ergibt.

Zur Vermeidung dieser Nachteile geht die Erfindung von folgenden Überlegungen aus:
- Die genannten Probleme treten insbesondere in den Übergangszonen auf, die benachbarte Rohre miteinander verbinden, also dort, wo die Flüssigkeit von einem Rohr in ein benachbartes Rohr (meist um etwa 180 Grad) umgelenkt wird.
- Der Endbereich eines Rohres soll erfindungsgemäß deshalb mit einer Verschlusskappe ausgebildet werden, die einen dichten Sitz gegenüber dem Rohr erlaubt, eine exakte Positionierung der Kappe am/im Rohr sicherstellt und eine möglichst gleichmäßige Durchströmbarkeit für das Fluid erlaubt.
- Ferner soll die Kappe so ausgebildet werden, dass möglichst baugleiche Kappen an benachbarten Rohren unmittelbar miteinander strömungs-technisch verbunden werden können.
- Darüber hinaus soll die Verschlusskappe die Möglichkeit erlauben, exakt in einem zugehörigen Gehäuse (beispielsweise einer Wanne eines Kollektors) positioniert zu werden.

Die Erfindung betrifft danach in ihrer allgemeinsten Ausführungsform eine Verschlusskappe für ein von Flüssigkeit durchströmbares Rohr eines Wärmespeichers mit den Merkmalen des Anspruchs 1.

Die zylindrische Form des Montagestutzens ermöglicht es, diesen im Wesentlichen koaxial zum Rohr in dieses zur Montage einzusetzen. Die umlaufende Dichtung(en) stellen sicher, dass keine Flüssigkeit zwischen Stutzen und Rohr eindringen kann.

Der am Stutzen einseitig befestigte Deckel dient der Umleitung der Flüssigkeit in Richtung auf die mindestens eine Öffnung für eine Zu- und/oder Ableitung der Flüssigkeit von einem benachbarten Rohr, in ein benachbartes Rohr beziehungsweise von einer Zuführleitung oder in eine Wegführleitung. Zu diesem Zweck ist der Deckel in Bezug auf das zugehörige Rohr konvex gewölbt, um Turbulenzen zu vermeiden und eine möglichst laminare Strömung auszubilden. Ein entsprechendes Ausführungsbeispiel ist in der beigeschlossenen Figur dargestellt.

Das Sperrorgan dient dazu, die Verschlusskappe in der gewünschten exakten Position innerhalb des zugehörigen Rohrendes anzuordnen und festzulegen. Zu diesem Zweck ist das Rohr korrespondierend ausgebildet, beispielsweise mit einem umlaufenden Hinterschnitt, in den das Sperrorgan einschnappen kann, wenn der Stutzen der Verschlusskappe in das entsprechende Rohrende eingeschoben wird. Auch dies ist in der beiliegenden Figur näher dargestellt und wird zusätzlich erläutert.

Mit der genannten Verschlusskappe wird ein konstruktiv einfaches Bauteil zur Verfügung gestellt, welches eine optimierte Durchströmung für das Fluid bereitstellt, Leckagen und/oder einen Lufteintritt vermeidet und gleichzeitig so gestaltet ist, dass sich eine strömungstechnisch optimierte Verbindung zu benachbarten Rohren beziehungsweise deren Verschlusskappe oder Anschlussleitungen ergibt.

Nach einer Ausführungsform ist das Sperrorgan so gestaltet, dass es sich von einem Anschlussbereich am Stutzen (zur radialen und achsialen Positionierung) mit seinem freien Ende in Richtung auf den Deckel der Verschlusskappe erstreckt, wobei das freie Ende des Sperrorgans einen größeren Abstand zur Mittenlängsachse des Stutzens aufweist als der Anschlussbereich des Sperrorgans.

Daraus folgt, dass das Sperrorgan in einem Winkel zur Mittenlängsachse des Stutzens verläuft, der beispielsweise (im unbelasteten Zustand des Sperrorgans) > 0 und < 45 Grad beträgt.

Bei dieser Konstruktion ist das Sperrorgan vorzugsweise reversibel verformbar. Dies ermöglicht es, beim Einsetzen der Verschlusskappe in ein Rohrende das Sperrorgan an seinem freien Ende zunächst radial nach innen zu drücken, um die Verschlusskappe (den Stutzen) zunächst noch ein Stück weiter in das Rohrende einschieben zu können, bis das Sperrorgan eine korrespondierende Aussparung, beispielsweise einen Hinterschnitt im Bereich der Innenwand des Rohres erreicht hat, um dann zurückzuschnappen, und zwar in die gewünschte Montageposition. Bei dieser Ausführung ergibt sich, dass die Verschlusskappe nicht mehr ohne weiteres aus dem Rohr entnehmbar ist. Insbesondere kann sich die Verschlusskappe auch unter dem genannten Betriebsdruck nicht mehr vom Rohr lösen.

Gleichzeitig bilden die in Richtung auf das freie Stutzenende folgenden Dichtungen eine sichere Anlage zwischen Stutzen und Rohr.

Anstelle eines Sperrorgans können mehrere Sperrorgane angeordnet werden, die dann umfangsseitig verteilt am Stutzen angeordnet werden. Dazu gehört eine Ausführungsform mit einem im Wesentlichen ringförmigen Sperrorgan, welches jedoch geschlitzt ist, wodurch einzelne Abschnitte des Sperrorgans ausgebildet werden, die individuell ihre Rastfunktion erfüllen können. Dies hat den Vorteil, dass auch dann, wenn beispielsweise ein Sperrorgan abbricht oder irreversibel deformiert werden sollte, die Funktionstüchtigkeit der Einrichtung insgesamt nicht beeinträchtigt wird.

Eine optimierte strömungstechnische Verbindung von einer solchen Verschlusskappe zu einer benachbarten Verschlusskappe und/oder Anschlussleitungen wird mit zwei, im Wesentlichen senkrecht zur Mittenlängsachse des Stutzens verlaufenden Rohrstücken erreicht, die sich von einem Anschlussbereich im Deckel weg erstrecken und an ihren freien Enden zur fluiddichten Verbindung mit korrespondierenden Rohrstücken einer baugleichen weiteren Verschlusskappe ausgebildet sind.

Mit anderen Worten: wie ausgeführt, liegen die Rohre eines Solarkollektors der genannten Art im Wesentlichen parallel nebeneinander, so dass auch die entsprechenden Verschlusskappen nebeneinander liegen. Durch entsprechende Dimensionierung der Rohrstücke können benachbarte Verschlusskappen an benachbarten Rohren bei der erfindungsgemäßen Gestaltung direkt fluidtechnisch miteinander verbunden werden, ohne zusätzliches Werkzeug und ohne zusätzliche Verbindungselemente.

"Im Wesentlichen senkrecht zur Mittenlängsachse des Stutzens" ist dabei im technischen Sinne zu verstehen. Das Fluid muss im Übergangsbereich von einem Rohr zum benachbarten Rohr umgelenkt werden, wobei eine möglichst gleichmäßige Strömung gewünscht wird. Die exakt rechtwinklige Ausrichtung der Rohrstücke zur Mittenlängsachse eines korrespondierenden Rohres ermöglicht es aber, benachbarte Rohrstücke von benachbarten Verschlusskappen optimal zu verbinden.

Dazu können die beiden Rohrstücke an der Verschlusskappe unterschiedlich lang ausgebildet sein. Die Rohrstücke weisen dann beispielsweise einen unterschiedlichen Innendurchmesser auf. Dabei kann der Außendurchmesser eines Rohrstücks maximal dem inneren Durchmesser des anderen Rohrstücks entsprechen oder umgekehrt: der Innendurchmesser eines Rohrstücks ist mindestens so groß wie der Außendurchmesser des anderen Rohrstücks, um so benachbarte Rohrstücke optimal ineinander führen und miteinander strömungstechnisch verbinden zu können.

Auch hierbei können im Verbindungsbereich der Rohrstücke zusätzlich Dichtungen vorgesehen werden, um einen Fluidverlust zu vermeiden.

Die Erfindung umfasst auch eine Verschlusskappe mit einem am Deckel angeformten Justierkörper, der in Richtung der Mittenlängsachse des Stutzens und senkrecht zu diesem über den Deckel nach außen vorsteht. Während der Deckel im Wesentlichen bombiert (nach außen gekrümmt) gestaltet ist, soll die rechtwinklige Außenkontur des Justierkörpers sicherstellen, dass die Einheit aus Rohr und Verschlusskappe innerhalb des Kollektorgehäuses gezielt ausgerichtet werden kann.

Schließlich sieht eine Ausführungsform vor, den Stutzen in Richtung auf sein freies Ende konisch verjüngend auszubilden, um hier bei Bedarf eine weitere Anlage an der Innenwand des Rohres zu schaffen.

Es kann Anwendungsfälle geben, bei denen nicht genügend Sonnenenergie zur Verfügung steht, um das Fluid innerhalb des Kollektors auf die gewünschte Temperatur anzuheben. Zu diesem Zweck sieht eine Ausführungsform der Erfindung vor, im Deckelbereich einen zusätzlichen Anschlussstutzen vorzusehen, dessen Mittenlängsachse parallel zur Mittenlängsachse des Stutzens verläuft. In diesen Anschlussstutzen kann ein entsprechender Heizstab eingeführt und am Anschlussstutzen befestigt werden, wobei der Heizstab selber dann im Wesentlichen parallel zum Rohr im Rohr liegt.

Die beschriebene Verschlusskappe lässt sich einteilig ausbilden, beispielsweise als Kunststoff-Spritzgussteil.

Weitere Merkmale der Erfindung ergeben sich aus den Merkmalen der Unteransprüche sowie den sonstigen Anmeldungsunterlagen.

Die Erfindung wird nachstehend anhand eines Ausführungsbeispieles näher erläutert. Dabei zeigen, jeweils in schematisierter Darstellung:
Figur 1: eine Aufsicht auf eine Verschlusskappe,
Figur 2: einen Schnitt entlang der Linie K - K gemäß Figur 1

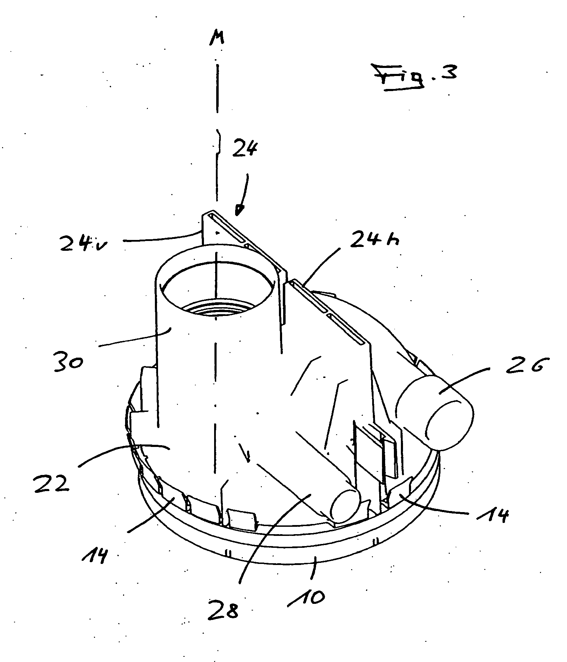

Figur 3: eine perspektive Ansicht der Verschlusskappe.

In den Figuren bezeichnet R ein Rohr, welches gemeinsam mit weiteren Rohren in einer nicht dargestellten Wanne eines Solarkollektors positioniert wird. Das Rohr kann aus Kunststoff bestehen. Es weist einen Kreisquerschnitt auf. Im freien Endbereich ist das Rohr R mit einer radial nach außen verlaufenden Stufe S ausgebildet, an die sich ein koaxial zur Mittenlängsachse M verlaufender Abschnitt A anschließt, dessen Innendurchmesser etwas größer ist als der des Rohrs R im Übrigen, wobei der Abschnitt A in Richtung auf das freie Ende E des Rohrs R einen konisch sich nach außen erweiternden Bereich K aufweist, der weiter in Richtung auf das freie Ende E eine nach innen gerichtete Abkröpfung B besitzt, an den sich ein weiterer, im Wesentlichen parallel zum Abschnitt A verlaufender Abschnitt A' und schließlich eine trichterförmige Erweiterung T anschließen.

In den offenen Endabschnitt des Rohrs R ist eine Verschlusskappe eingesetzt, und zwar mit ihrem zylinderförmigen Stutzen 10, der einen verdickten Abschnitt 12 aufweist, von dem umfangsseitig mehrere Sperrorgane 14 abstehen, die in der dargestellten Montageposition in den Bereich des Hinterschnitts eingreifen, der im Bereich der Rohrabschnitte B, K ausgebildet wird.

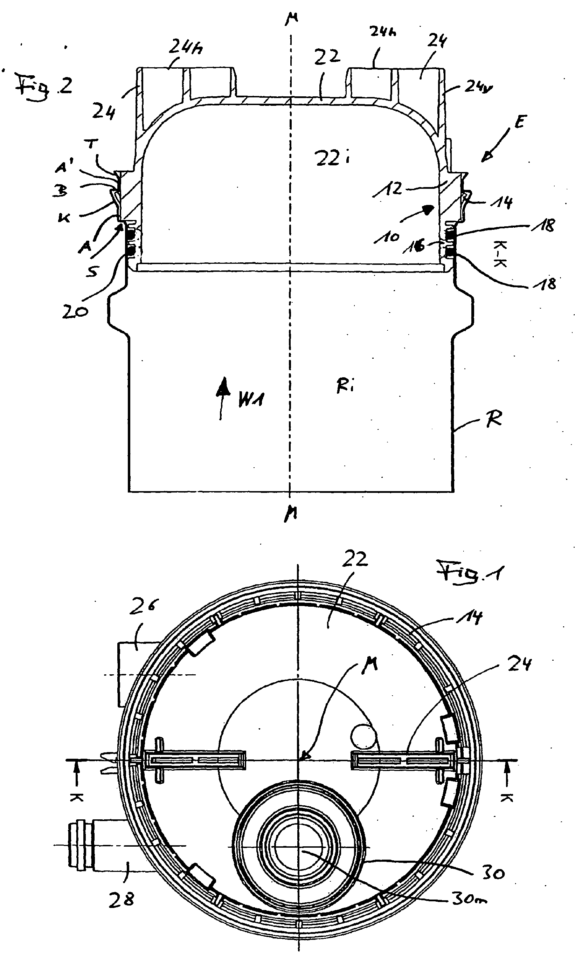

Der Stutzen 10 weist umfangsseitig eine Vielzahl solcher Sperrorgane 14 auf, wie Figur 1 zeigt, wobei jedes Sperrorgan 14 an einem Ende, in Figur 2 am unteren Ende, mit dem Stutzen 10 fest verbunden ist und von dort unter einem Winkel von etwa 40° zur Mittenlängsachse M des Rohrs R schräg nach außen verläuft, wodurch sich eine reversible Verformbarkeit des Sperrorgans 14 ergibt, welches wie die gesamte Verschlusskappe aus Kunststoff besteht.

Beim Einführen der Verschlusskappe in das Rohr R werden die Sperrorgane 14 entsprechend etwas nach innen gedrückt, bis sie in den durch die Abschnitte B, K gebildeten Raum radial nach außen einschnappen.

An den verdickten Abschnitt 12 schließt sich ein Abschnitt 16 in Richtung auf das freie Ende des Stutzens 10 an, auf dessen Außenseite umlaufende ringförmige Kammern 18 angeordnet sind, in denen Dichtringe 20 einliegen.

Figur 2 zeigt, dass die Dichtungen 20 die gewünschte Anlage an der RohrInnenwand in der Montageposition haben.

Der verdickte Abschnitt 12, der in Richtung auf den Abschnitt 16 auf der Stufe S des Rohrs R aufliegt, verläuft etwa bis in den Bereich der trichterförmigen Erweiterung T des Rohrs R.

An den Abschnitt 12 schließt sich (in Figur 2 nach oben) ein Deckel 22 an, dessen Innenkontur, bezogen auf das Rohr R, im Wesentlichen konvex ist. Von der Außenfläche des Deckels 22 stehen zwei Justierkörper 24 ab, die eine im Wesentlichen parallel zur Mittenlängsachse M verlaufende Fläche 24v und eine im Wesentlichen senkrecht dazu verlaufende Justierfläche 24h aufweisen, die in der Montageposition gegen eine Innenwand eines zugehörigen Kollektorgehäuses anliegt.

Vom Deckel 22 verlaufen im Wesentlichen senkrecht zur Mittenlängsachse M des Rohrs R zwei Rohrstücke 26, 28, wobei das Rohrstück 28 länger als das Rohrstück 26 ist (das Rohrstück 28 steht über das Rohrstück 26 vor) und das Rohrstück 28 einen Innendurchmesser aufweist, der im Wesentlichen dem Außendurchmesser des Rohrstücks 26 entspricht. Dies erlaubt es, eine baugleiche Verschlusskappe so mit der dargestellten Verschlusskappe zu verbinden, dass sich eine durchgehende Durchströmbarkeit entlang der Rohrstücke 26, 28 zwischen den Verschlusskappen und damit zwischen benachbarten Rohren R ergibt.

Figur 1 ist zu entnehmen, beispielhaft anhand des Rohrstücks 28, dass an dessen freiem Ende eine Nut zur Aufnahme eines Dichtrings vorgesehen ist. Korrespondierend dazu wird das Rohrstück 26 ausgebildet.

Figur 1 lässt ferner einen Anschlussstutzen 30 im Bereich des Deckels 22 erkennen, dessen Mittenlängsachse 30m parallel zur Mittenlängsachse M des Rohrs R verläuft. Dieser Anschlussstutzen dient zur Aufnahme und Befestigung einer nicht dargestellten Heizspirale, die mit ihrem Heizteil in einen Bereich 22i des Deckels 22 beziehungsweise Ri des Rohrs R ragt.

Die dargestellte Verschlusskappe ist ein Kunststoffteil, welches im Spritzguss hergestellt wurde. Mit Ausnahme der Dichtungen handelt es sich um ein einstückiges Teil. Eine Flüssigkeit, beispielsweise Wasser, durchströmt das Rohr R beispielsweise in Pfeilrichtung W1, gelangt dann in den Bereich 22i der Kappe 22 und von dort durch die Rohrstücke 26, 28 in korrespondierende Rohrstücke 28, 26 einer angeschlossenen Verschlusskappe und schließlich in entgegengesetzter Richtung zur Strömungsrichtung W1 in ein benachbartes Rohr beziehungsweise eine angeschlossene sonstige Leitung.

## Patentansprüche

1. Verschlusskappe für ein von Flüssigkeit durchströmbares Rohr (R) eines Wärmespeichers, mit folgenden Merkmalen:
a) einem im Wesentlichen zylindrischen Montagestutzen (10) mit mindestens einer umlaufenden Dichtung (20) zur flüssigkeitsdichten Anlage an einer Innenwand des Rohrs (R),
b) einem den Stutzen (10) einseitig verschließenden Deckel (22), mit mindestens einer Öffnung für eine Zu- und/oder Ableitung der Flüssigkeit,
b1) der Deckel (22) ist in Bezug auf das Rohr (R) konvex gewölbt und
b2) mit zwei, im Wesentlichen senkrecht zur Mittenlängsachse (M) des Stutzens (10) verlaufenden Rohrstücken (26, 28) ausgebildet, die sich von einem Anschlussbereich im Deckel (22) weg erstrecken und an ihren freien Enden zur fluiddichten Verbindung mit korrespondierenden Rohrstücken einer baugleichen weiteren Verschlusskappe ausgebildet sind,
c) mindestens einem, radial gegenüber der Dichtung (20) im Montagezustand vorstehenden Sperrorgan (14) **dadurch gekennzeichnet, dass** das Sperrorgan im Übergangsbereich zwischen Stutzen (10) und Deckel (22) angeordnet ist.

2. Verschlusskappe nach Anspruch 1 mit einem Sperrorgan (14), das sich von einem Anlagebereich am Stutzen (10) mit einem freien Ende in Richtung auf den Deckel (22) erstreckt, wobei das freie Ende des Sperrorgans (14) einen größeren Abstand zur Mittenlängsachse (M) des Stutzens (10) aufweist als der Anschlussbereich des Sperrorgans.

3. Verschlusskappe nach Anspruch 1 mit einem reversibel verformbaren Sperrorgan (14).

4. Verschlusskappe nach Anspruch 1 mit mehreren, umfangsseitig am Stutzen verteilt angeordneten Sperrorganen (14).

5. Verschlusskappe nach Anspruch 1, deren Rohrstücke (26, 28) unterschiedlich lang sind.

6. Verschlusskappe nach Anspruch 1, deren Rohrstücke (26, 28) einen unterschiedlichen Innendurchmesser aufweisen.

7. Verschlusskappe nach Anspruch 6, bei der der Außendurchmesser eines Rohrstücks maximal dem Innendurchmesser des anderen Rohrstücks entspricht.

8. Verschlusskappe nach Anspruch 6, bei der der Innendurchmesser eines Rohrstücks mindestens so groß ist wie der Außendurchmesser des anderen Rohrstücks.

9. Verschlusskappe nach Anspruch 1 mit einem am Deckel (22) angeformten Justierkörper (24), der in Richtung der Mittenlängsachse (M) des Stutzens (10) und senkrecht dazu über den Deckel (22) nach außen vorsteht.

10. Verschlusskappe nach Anspruch 9, deren Justierkörper (24) zwei rechtwinklig zueinander verlaufende freie Flächenabschnitte (24v, 24h) aufweist.

11. Verschlusskappe nach Anspruch 1, deren Stutzen (10) in Richtung auf sein freies Ende konisch verjüngend ausgebildet ist.

12. Verschlusskappe nach Anspruch 1 mit einem Anschlussstutzen (30) im Deckel (22), dessen Mittenlängsachse (30m) parallel zur Mittenlängsachse (M) des Stutzens (10) verläuft.

13. Verschlusskappe nach Anspruch 1, die einteilig ausgebildet ist.

14. Verschlusskappe nach Anspruch 1, konfektioniert als im Spritzgussverfahren hergestelltes Kunststoffteil.

## Claims

1. A sealing cap for a pipe (R) of a heat accumulator, through which a fluid can flow, featuring the following characteristics:
a) an essentially cylindrical assembly fitting (10) with at least one a peripheral seal (20) for contacting an inner wall of the pipe (R) in a fluid-tight fashion,
b) a cover (22) that serves for closing one side of the fitting (10) and has at least one opening for supplying and/or discharging the fluid,
b1) the cover (22) is arched in a convex manner with respect to the pipe (R),
b2) two pipe sections (26, 28) that essentially extend perpendicular to the central longitudinal axis (M) of the fitting (10), extending from a connecting region in the cover (22) and being designed at their free ends for being connected in a fluid-tight fashion to corresponding pipe sections of another sealing cap of identical design,
c) at least one locking device (14), that radially protrudes relative to the seal (20) in the assembled state,
**characterized in that** the locking device is arranged in the transition area between the fitting (10) and the cover (22).

2. The sealing cap according to Claim 1 with a locking device (14) that originates at a contact region on the fitting (10) and extends in the direction of the cover (22) with its free end, wherein the free end of the locking device (14) is spaced apart from the central longitudinal axis (M) of the fitting (10) by a greater distance than the connecting region of the locking device.

3. The sealing cap according to Claim 1 with a reversibly deformable locking device (14).

4. The sealing cap according to Claim 1 with several locking devices (14) that are distributed over the circumference of the fitting.

5. The sealing cap according to Claim 1, the pipe sections (26, 28) of which have different lengths.

6. The sealing cap according to Claim 1, the pipe sections (26, 28) of which have different inside diameters.

7. The sealing cap according to Claim 6, wherein the outside diameter of one pipe section maximally corresponds to the inside diameter of the other pipe section.

8. The sealing cap according to Claim 6, wherein the inside diameter of one pipe section is at least as large as the outside diameter of the other pipe section.

9. The sealing cap according to Claim 1 with an adjusting member (24) that is integrally formed onto the cover (22) and outwardly protrudes over the cover (22) in the direction of the central longitudinal axis (M) of the fitting (10) and perpendicular thereto.

10. The sealing cap according to Claim 9, the adjusting members (24) of which feature two free surface sections (24v, 24h) that lie perpendicular to one another.

11. The sealing cap according to Claim 1, the fitting (10) of which is conically tapered in the direction of its free end.

12. The sealing cap according to Claim 1 with a connection fitting (30) in the cover (22), wherein the central longitudinal axis (30m) of said connection fitting extends parallel to the central longitudinal axis (M) of the fitting (10).

13. The sealing cap according to Claim 1 realized in the form of a one-piece component.

14. The sealing cap according to Claim 1 prefabricated in the form of an injection-moulded plastic part.

## Revendications

1. Capuchon pour un tuyau (R) pouvant être traversé par un liquide, d'un récupérateur de chaleur, comprenant les caractéristiques suivantes :
a) une tubulure de montage (10) essentiellement cylindrique comprenant au moins un joint périphérique (20) pour contacter une paroi intérieure du tuyau (R) pour une installation étanche aux liquides,
b) un couvercle (22) fermant la tubulure (10) d'un côté, comprenant au moins une ouverture pour une amenée et/ou une sortie du liquide,
b1) le couvercle (22) est bombé de manière convexe par rapport au tuyau (R) et
b2) formé avec deux pièces de tuyau (26, 28) s'étendant essentiellement perdendiculaire à l'axe longitudinal médian (M) de la tubulure (10), qui s'éloignent d'une zone de raccordement dans le couvercle (22) et sont formées sur leurs extrémités libres, pour une liaison étanche aux fluides avec des pièces de tuyau correspondante d'un autre capuchon de construction identique,
c) au moins un organe d'arrêt (14) radialement en saillie par rapport au joint (20) dans l'état de montage,
**caractérisé en ce que** l'organe d'arrêt est disposé dans la zone de transition entre la tubulure (10) et le couvercle (22).

2. Capuchon selon la revendication 1 comprenant un organe d'arrêt (14) qui s'étend d'une zone de contact sur la tubulure (10) et qui e'étend avec une extrémité libre en direction du couvercle (22), sachant que l'extrémité libre de l'organe d'arrêt (14) présente un écart jusqu'à l'axe longitudinal médian (M) de la tubulure (10) plus grand que l'écart de la zone de raccordement de l'organe d'arrêt.

3. capuchon selon la revendication 1 comprenant un organe d'arrêt (14) pouvant être déformé de manière réversible.

4. Capuchon selon la revendication 1 comprenant plusieurs organes d'arrêt (14) répartis sur le pourtour de la tubulure.

5. Capuchon selon la revendication 1 dont les pièces de tuyau (26, 28) sont de différentes longueurs.

6. Capuchon selon la revendication 1 dont les pièces de tuyau (26, 28) présentent des diamètres intérieurs différents.

7. Capuchon selon la revendication 6, dans lequel le diamètre extérieur d'une pièce de tuyau correspond au maximum au diamètre intérieur de l'autre pièce de tuyau.

8. Capuchon selon la revendication 6, dans lequel le diamètre intérieur d'une pièce de tuyau est au moins aussi grand que le diamètre extérieur de l'autre pièce de tuyau.

9. Capuchon selon la revendication 1 comprenant un corps d'ajustage (24) formé integré sur le couvercle (22) qui fait saillie en direction de l'axe longitudinal médian (M) de la tubulure (10) et en plus fait saillie perpendiculairement vers l'extérieur au-dessus du couvercle (22).

10. Capuchon selon la revendication 9 dont le corps d'ajustage (24) présente deux sections de surface libres (24v, 24h) s'étendant perpendiculairement l'une par rapport à l'autre.

11. Capuchon selon la revendication 1 dont la tubulure (10) est formée avec une réduction conique en direction de son extrémité libre.

12. Capuchon selon la revendication 1 comprenant une tubulure de raccordement (30) dans le couvercle (22), dont l'axe longitudinal médian (30m) s'étend parallèlement à l'axe longitudinal médian (M) de la tubulure (10).

13. Capuchon selon la revendication 1 qui est formé de manière monobloc.

14. Capuchon selon la revendication 1 fabriqué en tant que pièce de plastique fabriquée par un procédé de moulage par injection. '
